# EUROPÄISCHE PATENTSCHRIFT

(11) **EP 1 265 416 B1**
(45) Veröffentlichungstag und Bekanntmachung des Hinweises auf die Patenterteilung: **08.11.2006**
(21) Anmeldenummer: 02090172.4
(22) Anmeldetag: 14.05.2002
(51) Int. Cl.: H04L 29/06, H04Q 7/38

(54) **Verfahren und Anordnung zum Kontrollieren des Zugriffs auf Daten in Mobil-Kommunikationsnetzen**
System and method for controlling data access in mobile networks
Procédé et système de contrôle d'accès aux données dans des réseaux de télécommunication mobiles

(30) Priorität: 06.06.2001 DE 10127865
(43) Veröffentlichungstag der Anmeldung: 11.12.2002
(73) Patentinhaber: SIEMENS AKTIENGESELLSCHAFT, 80333 München (DE)
(72) Erfinder: Boehmer, Bernhard, Dr., 14055 Berlin (DE); Leitgeb, Manfred, 2440 Gramatneusiedl (AT)

(56) Entgegenhaltungen:
- WO-A-98/41038
- WO-A-98/52379

## Beschreibung

Die Erfindung betrifft ein Verfahren zum Kontrollieren des Zugriffs auf Daten in Mobil-Kommunikationsnetzen. Es sind Mobil-Telekommunikationsnetze bekannt, in denen Daten so abgespeichert sind, dass bei einem Zugriff auf diese Daten durch Netzknoten der Mobil-Kommunikationsnetze keine Zugriffskontrolle erfolgt. Dieses Verfahren war bisher ausreichend sicher, da diese Netze in sich geschlossen waren und daher von außen kein Zugriff auf die Daten möglich war. Ein Beispiel für ein derartiges Netz ist ein nach dem GSM-Standard (Global System for Mobile Communication) aufgebautes Mobil-Kommunikationsnetz, bei dem nutzerspezifische Daten beispielsweise in einem Heimat-Register (HLR, Home Location Register) gespeichert sind. Andere in diesen GSM-Netzen vorhandene Netzelemente können auf das Heimat-Register zugreifen, ohne dass eine Zugriffskontrolle erfolgt.

Im Zuge der Öffnung der Mobil-Kommunikationsnetze kann jedoch nicht mehr von einem in sich geschlossenen Netz ausgegangen werden, da auch externe Einrichtungen (z.B. Netzknoten, die Dienste für einen Endnutzer erbringen = Application Server) auf derartige Daten zugreifen können. Bei Mobil-Kommunikationsnetzen nach dem UMTS-Standard (UMTS = Universal Mobile Telecommunications Service) ist es sogar möglich, dass mehrere Netzbetreiber gemeinsam ein Netz benutzen.

Aus der deutschen Patentschrift DE 195 24 822 C1 ist eine Einrichtung zur Überprüfung der Berechtigung zur Benutzung von geschützten Diensten bekannt, bei der in einem Rechner zur Überprüfung der Berechtigung erforderliche Algorithmen und Daten abgelegt sind.

Aus der deutschen Offenlegungsschrift DE 199 41 922 A1 ist ein Verfahren zur Abfrage von in einem Rechner gespeicherten Daten mittels eines Mobiltelefons bekannt, bei dem ein Abfragedatensatz von dem Mobiltelefon zu einem SMS-Rechner übertragen wird, welcher eine Legitimation überprüft und dann aus Rechnern oder Datenbanken Informationen abruft.

Aus der internationalen Patentanmeldung WO 98/41038 A2 ist ein System zum Bearbeiten von Dienst-Daten in einem Telekommunikationssystem bekannt. Dabei ist ein Kommunikationsendgerät eines Teilnehmers über ein Zugangssystem mit einem Datenspeicher verbunden. Das Zugangssystem kontrolliert dabei den Zugriff des Teilnehmers auf die Daten; der Zugriff auf die Daten erfolgt über das Zugangssystem.

Der Erfindung liegt die Aufgabe zugrunde, ein Verfahren und eine Anordnung anzugeben, mit denen der Zugriff auf Daten von Benutzern in Mobil-Kommunikationsnetzen trotz Kontrolle nahezu unbeeinträchtigt erfolgen kann.

Diese Aufgabe wird bei einem Verfahren der oben angegebenen Art erfindungsgemäß dadurch gelöst, dass auf eine Anregung hin durch eine Datenverwertungseinrichtung in einem oder mehreren Datenspeichern des jeweiligen Mobil-Kommunikationsnetzes abgelegte Daten eines Benutzers des Mobil-Kommunikationsnetzes angesprochen werden, zur Ansprache der Daten eine Lese-Ansprachenachricht oder eine Schreib-Ansprachenachricht von der Datenverwertungseinrichtung an den jeweiligen Datenspeicher gesendet wird, von dem jeweiligen Datenspeicher eine Überprüfungsanfrage an eine zentrale Kontrolleinrichtung gesendet wird, danach von der zentralen Kontrolleinrichtung des Mobil-Kommunikationsnetzes anhand von vorgegebenen Überprüfungskriterien überprüft wird, ob die Datenverwertungseinrichtung berechtigt ist, auf diese Daten zuzugreifen, und ausschließlich bei positivem Überprüfungsergebnis von der zentralen Kontrolleinrichtung der Zugriff ermöglicht wird. Hierbei ist insbesondere vorteilhaft, dass die Kontrolle des Zugriffs auf die Daten von einer zentralen Kontrolleinrichtung des Mobil-Kommunikationsnetzes vorgenommen wird, so dass bei den einzelnen Datenspeichern keine jeweils eigene Kontrolleinrichtung notwendig ist.
Bei diesem Verfahren kommuniziert die Datenverwertungseinrichtung direkt mit dem jeweiligen Datenspeicher. Der jeweilige Datenspeicher seinerseits beauftragt die zentrale Kontrolleinrichtung mit der Überprüfung der Berechtigung der Datenverwertungseinrichtung. Hierbei ist insbesondere vorteilhaft, dass bei Vorliegen einer Zugriffsberechtigung von der Datenverwertungseinrichtung aus dem Datenspeicher ausgelesene Daten direkt vom Datenspeicher zur Datenverwertungseinrichtung übertragen werden und bei dieser Übertragung die zentrale Kontrolleinrichtung nicht signalflussbezogen zwischen Datenspeicher und Datenverwertungseinrichtung zwischengeschaltet ist. Daher ist eine hohe Datenübertragungsgeschwindigkeit realisierbar.

Das erfindungsgemäße Verfahren kann auch derart ausgestaltet sein, dass von der zentralen Kontrolleinrichtung bei positivem Prüfungsergebnis der Zugriff ermöglicht wird, indem die zentrale Kontrolleinrichtung eine positive Überprüfungsantwortnachricht an den jeweiligen Datenspeicher sendet, und daraufhin der Datenspeicher die angesprochenen Daten an die Datenverwertungseinrichtung übermittelt.

Das erfindungsgemäße Verfahren kann auch derart ausgestaltet sein, dass von der zentralen Kontrolleinrichtung bei positivem Prüfungsergebnis der Zugriff ermöglicht wird, indem die zentrale Kontrolleinrichtung eine positive Überprüfungsantwortnachricht an den jeweiligen Datenspeicher sendet, daraufhin der Datenspeicher die angesprochenen Daten schreibend verändert.

Die oben genannte Aufgabe wird ebenfalls erfindungsgemäß gelöst durch eine Anordnung zum Kontrollieren des Zugriffs auf Daten in Mobil-Kommunikationsnetzen, welche aufweist ein oder mehrere Datenspeicher zur Speicherung von Daten von Benutzern der Mobil-Kommunikationsnetze, ein oder mehrere Datenverwertungseinrichtungen mit Zugriffsmitteln auf diese Daten, und eine durch den Datenspeicher mit der Datenverwertungseinrichtung verbundene zentrale Kontrolleinrichtung, die bei Datenzugriffen überprüft, ob die jeweilige Datenverwertungseinrichtung berechtigt ist, auf die jeweiligen Daten zuzugreifen.

Zur weiteren Erläuterung der Erfindung ist in
- Figur 1: eine schematische Darstellung eines Ausführungsbeispiels für eine Anordnung zum Ausführen des Verfahrens zum Kontrollieren des Zugriffs auf Daten in Mobil-Kommunikationsnetzen, und in
- Figur 2: ein Ausführungsbeispiel einer Datensammlung, für die der Zugriff kontrolliert wird,
dargestellt.

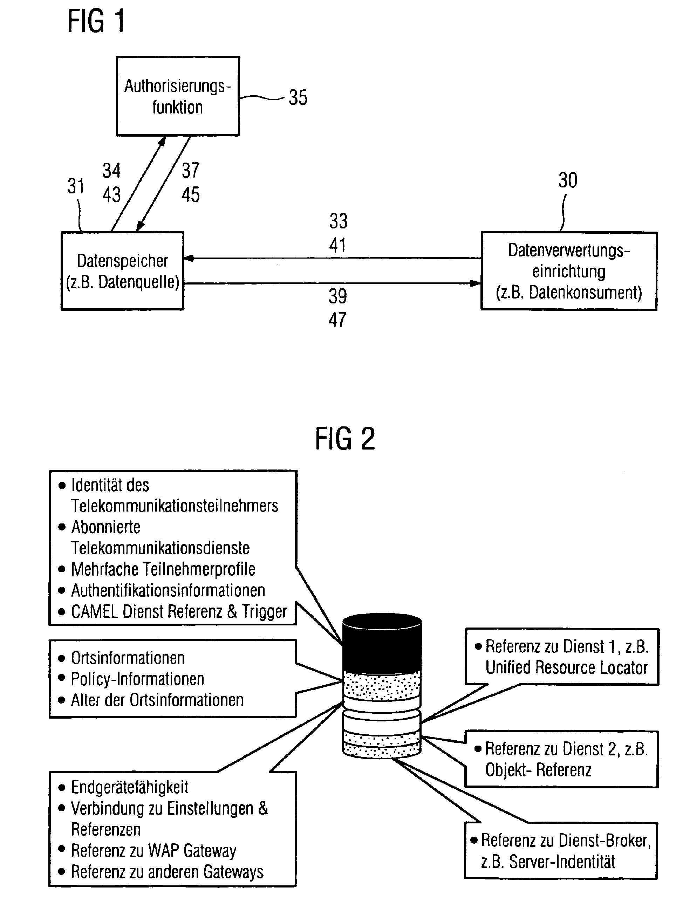

In Figur 1 sind in schematischer Darstellung drei Elemente von Kommunikationsnetzen aufgezeigt, welche sich gemeinsam in einem oder auch verteilt in mehreren verschiedenen Mobil-Kommunikationsnetzen befinden können. Rechts in der Figur 1 ist eine Datenverwertungseinrichtung 30 dargestellt. Eine solche Einrichtung kann auch als Datenkonsument bezeichnet werden. Im Rahmen der vorliegenden Anmeldung soll unter Datenverwertungseinrichtung jede Einrichtung verstanden werden, die zum Ausführen einer Funktion Daten benötigt, wobei diese Daten in anderen Netzelementen des Mobil-Kommunikationsnetzes gespeichert sind. Bei einer derartigen Datenverwertungseinrichtung kann es sich beispielsweise um einen Netzknoten handeln, der von einem Rechner gebildet wird, wobei auf dem Rechner ein Programm abläuft, das einen Dienst für einen Endnutzer erbringt. Ein solches Programm wird "Application" genannt; ein solcher Rechner wird oft als "Application Server" bezeichnet. Desweiteren ist in der Figur 1 ein Datenspeicher 31 dargestellt, der auch als Datenquelle bezeichnet werden kann. Unter Datenspeicher ist eine Einrichtung eines Mobil-Kommunikationsnetzes zu verstehen, in der personenbezogene Daten eines Benutzers des Mobil-Kommunikationsnetzes gespeichert sind. In einem Mobil-Kommunikationsnetz können mehrere Datenspeicher vorhanden sein. Ebenso können sich derartige Datenspeicher auch in unterschiedlichen Mobil-Kommunikationsnetzen befinden, wobei diese unterschiedlichen Mobil-Kommunikationsnetze miteinander gekoppelt sind. Neben der Datenverwertungseinrichtung 30 und dem Datenspeicher 31 ist eine zentrale Kontrolleinrichtung 35 dargestellt, welche beispielsweise durch einen "Proxy" genannten Rechner realisiert sein kann. Die zentrale Kontrolleinrichtung führt eine Autorisierungsfunktion aus, das heißt, sie kontrolliert den Zugriff auf in dem Datenspeicher gespeicherten Daten durch die Datenverwertungseinrichtung 30.

In der Figur 1 ist ein Verfahrensablauf schematisch dargestellt, bei dem die Datenverwertungseinrichtung 30 Daten aus dem Datenspeicher 31 ausliest. Dazu sendet die Datenverwertungseinrichtung 30 eine Lese-Ansprachenachricht 33 an den Datenspeicher 31. Die Lese-Ansprachenachricht 33 enthält die Informationen, dass die Datenverwertungseinrichtung 30 aus dem Datenspeicher 31 Daten eines ersten Benutzers des Mobil-Kommunikationsnetzes auslesen möchte. Der Lese-Ansprachenachricht 33 ist entnehmbar, welche Daten von welchem Nutzer ausgelesen werden sollen. Optional kann beispielsweise in der Lese-Ansprachenachricht 33 auch die Information enthalten sein, welchen Dienst die Datenverwertungseinrichtung 30 erbringen will, das heißt, für welchen Dienst sie die Daten des ersten Benutzers benötigt. Die Datenverwertungseinrichtung 30 sendet die Lese-Ansprachenachricht 33 dann an den Datenspeicher 31, wenn sie eine Anregung zum Senden erhalten hat. Dies kann beispielsweise der Fall sein, wenn der erste Nutzer einen Dienst seines Mobil-Kommunikationsnetzes nutzen möchte und dieses durch Betätigung der entsprechenden Tasten auf seinem Mobil-Telefon kundtut. Auf eine derartige Anregung hin erhält die Datenverwertungseinrichtung die Information, dass Daten über den jeweiligen Benutzer angefordert werden müssen. Bei der Datenverwertungseinrichtung kann es sich um die diensterbringende Einrichtung handeln. Die Datenverwertungseinrichtung 30 kann aber auch von einer anderen diensterbringenden Einrichtung dazu aufgefordert werden, die Daten zu besorgen.

Der Datenspeicher 31 sendet daraufhin eine Überprüfungsanfrage 34 an eine weitere zentrale Kontrolleinrichtung 35. Nachdem die Überprüfungsanfrage 34 die zentrale Kontrolleinrichtung 35 erreicht hat, überprüft diese anhand von vorgegebenen Überprüfungskriterien, ob die Datenverwertungseinrichtung 30 berechtigt ist, auf die entsprechenden Daten zuzugreifen. Dabei sind vielfältige (auch komplexe) Überprüfungskriterien vorstellbar. Für das oben genannte Ausführungsbeispiel (Diensterbringung für einen Dienstnutzer durch die Datenverwertungseinrichtung 30, die die Gestalt eines Application Servers besitzt) seien beispielhaft folgende Überprüfungskriterien genannt:
- Welche Applikation (Applikation = Anwendung, die einen Dienst erbringt) greift auf die Daten zu?
- Ist die Applikation berechtigt, die Daten anzusprechen (eine Anfrage zu stellen)?
- Ist die Applikation berechtigt, auf ein Datum der angesprochenen Art zuzugreifen?
- Ist die Applikation berechtigt, auf das angesprochene Datum des speziellen Endnutzers zuzugreifen, das heißt, ist der Endnutzer ein Abonnent (Subscriber) des Dienstes, der auf das Datum zugreifen will?
- Ist die Applikation berechtigt, das Datum zu lesen?
- Ist die Applikation berechtigt, das Datum zu modifizieren?
- Ist der Endnutzer zum Zeitpunkt der Ansprache des Datums für den jeweiligen Dienst gesperrt, da er zum Beispiel seine Dienst-Gebühren nicht entrichtet hat?
- Hat der Endnutzer verfügt, dass zum Zeitpunkt der Ansprache des Datums gerade dieses Datum nicht zu Verfügung gestellt werden soll, weil
   a) das Datum nur in bestimmten Zeiträumen zur Verfügung stehen soll,
   b) der Endnutzer ein für den Dienst ungeeignetes Endgerät benutzt, oder
   c) das Datum nicht zur Verfügung stehen soll, weil sich der Endnutzer an einem vorbestimmten Ort befindet?

Anhand solcher oder weiterer Überprüfungskriterien stellt die zentrale Kontrolleinrichtung fest, ob die Datenverwertungseinrichtung berechtigt ist, auf die entsprechenden Daten zuzugreifen. Kommt die Überprüfung zu einem positiven Überprüfungsergebnis (das heißt die Berechtigung der Datenverwertungseinrichtung liegt vor), so ermöglicht die zentrale Kontrolleinrichtung 35 den Zugriff auf das jeweilige Datum. Dies geschieht, indem die zentrale Kontrolleinrichtung 3 bei positivem Überprüfungsergebnis eine positive Überprüfungsantwortnachricht 37 an den Datenspeicher 31 zurücksendet. Daraufhin übermittelt der Datenspeicher 31 die angeforderten Daten mittels einer Nachricht 39 an die Datenverwertungseinrichtung 30. Damit hat ein erfolgreicher Lesevorgang aus dem Datenspeicher stattgefunden. Die Datenverwertungseinrichtung 30 hat ein Datum des ersten Benutzers des Mobil-Kommunikationsnetzes erhalten und kann unter Nutzung dieses Datums den Dienst für den ersten Benutzer erbringen.

Wenn die Datenverwertungseinrichtung 30 zur Dienstausführung ein Datum in der Datenquelle modifizieren muss (das heißt, das Datum schreibend verändert), so geschieht dies, indem die Datenverwertungseinrichtung 30 eine Schreib-Ansprachenachricht 41 an den Datenspeicher 31 sendet. Dieser sendet eine Überprüfungsanfrage 43 an die zentrale Kontrolleinrichtung 35. Diese zentrale Kontrolleinrichtung 35 überprüft, ob die Datenverwertungseinrichtung berechtigt ist, einen derartigen schreibenden Zugriff auf das ausgewählte Datum des Datenspeichers für den ersten Nutzer des Kommunikationsnetzes durchzuführen. Dabei können wiederum die oben genannten oder ähnliche Überprüfungskriterien angewandt werden. Im Falle eines positiven Überprüfungsergebnisses (das heißt, die Datenverwertungseinrichtung ist berechtigt, auf das ausgewählte Datum schreibend zuzugreifen) sendet die zentrale Kontrolleinrichtung 35 eine weitere Überprüfungsantwortnachricht 45 an die Datenquelle 31, welche daraufhin entsprechend dem in der Schreib-Ansprachenachricht 41 enthaltenen Informationen schreibende Veränderung an den Daten vornimmt. Optional kann der Datenspeicher 31 nach erfolgreichem Schreibvorgang eine Bestätigungsnachricht 47 an die Datenverwertungseinrichtung senden, um dieser den erfolgreichen Abschluss des Schreibprozesses mitzuteilen. Nun hat die Datenverwertungseinrichtung 30 die Information, dass der schreibende Zugriff auf die in dem Datenspeicher 31 gespeicherten benutzerspezifischen Daten des ersten Benutzers des Mobil-Kommunikationsnetzes erfolgreich durchgeführt wurde und die Datenverwertungseinrichtung 30 kann mit der Diensterbringung fortfahren.

Bei dem geschilderten Ausführungsbeispiel des erfindungsgemäßen Verfahrens ist besonders vorteilhaft, dass die Überprüfung der Zugriffsberechtigung nicht von der Datenquelle (Datenspeicher) ausgeführt werden muss, sondern dass diese Überprüfung durch die zentrale Kontrolleinrichtung ausgeführt wird. Dies ist gerade deshalb von Vorteil auf, weil in bestehenden Mobil-Kommunikationsnetzen bereits große Datenmenge mit zum Teil streng spezifizierten Datenmodellen vorliegen und eine Erweiterung dieser Daten um Zugriffsberechtigungsinformationen schwierig und sehr aufwendig wäre. Die Erfindung weist aber gerade den Vorteil auf, dass die vorhandenen Daten nicht modifiziert werden, sondern dass die Zugriffskontrolle durch ein additives Hinzufügen der Zugriffsberechtigungsinformationen gelöst wird. Die Zugriffsberechtigungsinformationen (also z.B. die oben genannten Überprüfungskriterien) sind in der zentralen Kontrolleinrichtung 35 unabhängig von der Datenquelle gespeichert, so dass zum Beispiel auch ein Ändern der Zugriffskontrollinformationen keine Auswirkung auf die Daten des Datenspeichers 31 hat. Dies ermöglicht es, auch bereits bestehende Netze (beispielsweise GSM-Mobilfunknetze) mit bereits vorhandenen Datenmengen in Datenspeichern mit dem erfindungsgemäßen Kontrollverfahren "aufzurüsten". Das erfindungsgemäße Verfahren kann als "verteilte Zugriffskontrolle auf Daten" bzw. "verteilte Zugriffsautorisierung von Daten" bezeichnet werden, da die personenbezogenen Nutzdaten der Benutzer der Mobil-Kommunikationsnetze und die Zugriffskontrolldaten bzw. -informationen nicht notwendigerweise auf einem Rechner vorliegen müssen, sondern vielmehr auch auf verschiedene Rechner bzw. verschiedene Netzelemente verteilt vorliegen können.

Ein weiterer Vorteil des Verfahrens besteht darin, dass sich die Datenverwertungseinrichtung 30 innerhalb oder auch außerhalb des Mobil-Telekommunikationsnetzes befinden kann, zu dem der Datenspeicher 31 gehört. Dadurch ist auch eine Zugriffskontrolle über Netzgrenzen hinweg möglich.

Die Datenverwertungseinrichtung bzw. die von dieser Datenverwertungseinrichtung ausgeführte Datenverwertungsfunktion kann durch eine Datenverwertungseinrichtung in Form einer Diensteeinrichtung bzw. Dienstefunktionen dargestellt werden. Derartige Dienste werden häufig als "Value Added Services" bezeichnet. Als zentrale Kontrolleinrichtung kann ein Nutzerprofil-Zugriffmanager (User Profile Access Manager) dienen. Der Datenspeicher kann in verteilter Form dargestellt sein. Zu diesem Datenspeicher können ein Nutzerprofil, verschiedene Datenmengen sowie weitere Datenmengen gehören, welche sich in einem anderen Netzwerk als demjenigen befinden, in dem sich das Nutzerprofil befindet.

Das Nutzerprofil selbst enthält Verweise (Referenzen) auf die eigentlichen Daten der Benutzer, welche sich in den Datenmengen sowie den weiteren Datenmengen befinden. Wenn die Datenverwertungseinrichtung auf derartige Daten zugreifen will, so sendet sie eine entsprechende Nachricht (ähnlich wie bei den in Figur 1 beschriebenen Nachrichtenflüssen) an die zentrale Kontrolleinrichtung, welche nach Ausführung ihrer Kontrollfunktion Lese- oder Schreibnachrichten an den Datenspeicher, hier konkret an das Nutzerprofil, sendet. Da das Nutzerprofil Verweise zu den Daten enthält, werden diese Lese- bzw.

Schreibnachrichten zu der jeweils zuständigen Datenmenge weitergeleitet, wo dann ein Lesezugriff oder ein Schreibzugriff stattfindet.

Dabei ist besonders vorteilhaft, dass eine Datenverwertungseinrichtung, welche sich in derselben Domain wie eine bestimmte Datenmenge befindet, auf diese bestimmte Datenmenge zugreifen kann unter Nutzung der zentralen Kontrolleinrichtung einer anderen Domain. Somit kann die zentrale Kontrolleinrichtung auch von Datenverwertungseinrichtungen und Datenspeichern anderer Domains bzw. anderer Netzwerke genutzt werden.

Das Durchführen einer Zugriffskontrolle wird auch als Autorisierungsfunktion bezeichnet.
Die verschiedenen Datenmengen können sich auch auf verschiedenen Rechnern befinden.
Die Datenmenge kann beispielsweise sogenannte "Value Added Services Personal Settings" enthalten. Darunter versteht man Konfigurations- und andere Daten eines Endnutzers, die zu einem bestimmten Dienst (Value Added Service) gehören.

In Figur 2 sind Beispiele für Daten angegeben, die in Datenspeichern von Kommunikationsnetzen gespeichert werden können und für die mit den erläuterten Verfahren und Anordnungen eine Zugriffskontrolle durchgeführt werden kann. In der linken Hälfte der Figur sind Informationen dargestellt, die oft im Zusammenhang mit Mobil-Kommunikationsnetzen nach dem GSM-Standard oder dem UMTS-Standard auftreten. Auf der rechten Seiten sind Beispiele für Daten dargestellt, die dienstspezifische Informationen (Value Added Service Specific Information) enthalten.

Eine Anordnung zum Durchführen einer Zugriffskontrolle kann auch bei einem sogenannten "Instant Messaging Dienst" genutzt werden. Dieser Dienst wird von einem Rechner (Instant Messaging Server) durchgeführt. Ein erster Endnutzer nimmt mit seinem Mobil-Telefon an diesem Dienst teil. Im Laufe des Dienstes können Nachrichten (messages) an verschiedene MobilTelefone anderer Endnutzer gesendet werden. Der Rechner möchte zur Erbringung des Dienstes auch den Aufenthaltsort des ersten Endnutzers mit seinem Mobil-Telefon verwenden. Dieser Aufenthaltsort wird angegeben durch eine "Cell-Id" genannte Kennnummer einer Funkzelle des Mobil-Kommunikationsnetzes. Diese "Cell-Id" ist beispielsweise in GSM-Netzen im Heimat-Register HLR gespeichert. Um nun eine wirksame Zugriffskontrolle bezüglich des Zugriffs durch den Rechner auf die in dem Heimat-Register HLR gespeicherten Daten zu ermöglichen, kann das zuvor beschriebene Verfahren genutzt werden. Die prinzipielle Funktionsweise der Zugriffskontrolle bei diesem Anwendungsbeispiel ist ähnlich der im Zusammenhang mit der Figur 1 erläuterten. Die Zugriffskontrolle gewährleistet in diesem Beispiel, dass nur dann eine Instant Messaging Applikation (die auf dem Rechner läuft) auf die Cell-Id der Mobilfunkzelle zugreifen kann, wenn die Applikation dazu befugt ist und dieses bei der Überprüfung durch die zentrale Kontrolleinrichtung festgestellt wird. In diesem Fall können Überprüfungskriterien verwendet werden, welche einen eventuellen Wunsch des ersten Endnutzers mit seinem Mobil-Telefon berücksichtigen, seinen Aufenthaltsort nur zu bestimmten Zeiten zugänglich machen zu wollen. Daher wird bei der Überprüfung der aktuelle Zeitpunkt der Ansprache der jeweiligen Daten berücksichtigt werden.

Bei diesem Ausführungsbeispiel ist besonders vorteilhaft, dass durch Auslagerung der Zugriffskontrolle auf die zentrale Kontrolleinrichtung eine Veränderung des Heimat-Registers HLR zum Zwecke der Zuganskontrolle vermieden wird. Weiterhin ist vorteilhaft, dass auf diese Weise auch Zugriffskontrollen auf stark verteilte Daten relativ einfach durchgeführt werden können. Solche stark verteilten Daten würden beispielsweise vorliegen, wenn das Heimat-Register HLR physikalisch auf verschiedene Rechner aufgeteilt ist.

Allgemein ist zu der beschriebenen Erfindung anzumerken, dass als Datenspeicher sämtliche Einrichtungen eines Mobil-Kommunikationsnetzes genutzt werden können, die in der Lage sind, benutzerindividuelle Daten dauerhaft aufzubewahren. Als Beispiele seien neben dem schon erwähnten Heimat-Register HLR ein WAP-Gateway, ein Dienstesteuerpunkt SCP (SCP = Service Control Point) oder ein sogenannter "Presence-Server" genannt.

Die zentrale Kontrolleinrichtung kann beispielsweise von einem in dem Mobil-Kommunikationsnetz vorhandenen Rechner realisiert werden. Ebenso ist es aber auch möglich, dass die zentrale Kontrolleinrichtung auf mehrere Rechner verteilt realisiert wird. Die Bezeichnung "zentrale Einrichtung" soll lediglich darauf hindeuten, dass die Funktion, die die zentrale Kontrolleinrichtung ausführt, lediglich einmal im Netz durchgeführt wird (logische Zentralisierung).

Daten von Benutzern des Mobil-Kommunikationsnetzes, für die eine Zugriffskontrolle durchgeführt wird, können beispielsweise sein:
- Aufenthaltsort des Nutzers mit seinem Mobiltelefon
- Adresse
- Name
- Kontonummer
- Prepaid-Kontonummer
- Subscribierte (abonnierte) Dienste
- Terminal Eigenschaften (z.B. Mobiltelefon-Eigenschaften)
- Verfügbarkeit
- Stimmung des Endnutzers.

## Patentansprüche

1. Verfahren zum Kontrollieren des Zugriffs auf Daten in Mobil-Kommunikationsnetzen, bei dem
- auf eine Anregung hin durch eine Datenverwertungseinrichtung (30) in einem oder mehreren Datenspeichern (31) des jeweiligen Mobil-Kommunikationsnetzes abgelegte Daten eines Benutzers des Mobil-Kommunikationsnetzes angesprochen werden,
**dadurch gekennzeichnet, dass**
- zur Ansprache der Daten eine Lese-Ansprachenachricht (33) oder eine Schreib-Ansprachenachricht (41) von der Datenverwertungseinrichtung (30) an den jeweiligen Datenspeicher (31) gesendet wird,
- von dem jeweiligen Datenspeicher (31) eine Überprüfungsanfrage (34, 43) an eine zentrale Kontrolleinrichtung (35) gesendet wird,
- danach von der zentralen Kontrolleinrichtung (35) des Mobil-Kommunikationsnetzes anhand von vorgegebenen Überprüfungskriterien überprüft wird, ob die Datenverwertungseinrichtung (30) berechtigt ist, auf diese Daten zuzugreifen, und
- ausschließlich bei positivem Überprüfungsergebnis von der zentralen Kontrolleinrichtung (35) der Zugriff ermöglicht wird.

2. Verfahren nach Anspruch 1,
**dadurch gekennzeichnet, dass**
- von der zentralen Kontrolleinrichtung (35) bei positivem Prüfungsergebnis der Zugriff ermöglicht wird, indem
- die zentrale Kontrolleinrichtung (35) eine positive Überprüfungsantwortnachricht (37) an den jeweiligen Datenspeicher (31) sendet, und
- daraufhin der Datenspeicher (31) die angesprochenen Daten an die Datenverwertungseinrichtung (30) übermittelt (39).

3. Verfahren nach Anspruch 1,
**dadurch gekennzeichnet, dass**
- von der zentralen Kontrolleinrichtung (35) bei positivem Prüfungsergebnis der Zugriff ermöglicht wird, indem
- die zentrale Kontrolleinrichtung (35) eine positive Überprüfungsantwortnachricht (45) an den jeweiligen Datenspeicher (31) sendet,
- daraufhin der Datenspeicher die angesprochenen Daten schreibend verändert.

4. Anordnung zum Kontrollieren des Zugriffs auf Daten in Mobil-Kommunikationsnetzen, welche aufweist
- ein oder mehrere Datenspeicher (31) zur Speicherung von Daten von Benutzern der Mobil-Kommunikationsnetze,
- ein oder mehrere Datenverwertungseinrichtungen (30) mit Zugriffsmitteln auf diese Daten, und
- eine zentrale Kontrolleinrichtung (35), die bei Datenzugriffen überprüft, ob die jeweilige Datenverwertungseinrichtung (30) berechtigt ist, auf die jeweiligen Daten zuzugreifen,
**dadurch gekennzeichnet, dass**
- die zentrale Kontrolleinrichtung durch den Datenspeicher mit der Datenverwertungseinrichtung verbunden ist.

## Claims

1. Method for controlling access to data in mobile communications networks, in which
- data which is stored in one or more data memories (31) in the respective mobile communications network for a user of the mobile communications network is addressed by a data processing device (30) when prompted,
**characterized in that**
- a read addressing message (33) or a write addressing message (41) is sent from the data processing device (30) to the respective data memory (31) in order to address the data,
- the respective data memory (31) sends a checking request (34, 43) to a central control device (35),
- after which the central control device (35) in the mobile communications network uses predetermined checking criteria to check whether the data processing device (30) is authorized to access such data, and
- the central control device (35) allows access only if the check result is positive.

2. Method according to Claim 1, **characterized in that**
- if the check result is positive, the central control device (35) allows access **in that**
- the central control device (35) sends a positive check response message (37) to the respective data memory (31), and
- the data memory (31) then transmits (39) the addressed data to the data processing device (30).

3. Method according to Claim 1, **characterized in that**
- if the check result is positive, the central control device (35) allows access **in that**
- the central control device (35) sends a positive check response message (45) to the respective data memory (31), and
- the data memory then amends the addressed data by writing.

4. Arrangement for controlling access to data in mobile communications networks, which has
- one or more data memories (31) for storing data for users of the mobile communications networks,
- one or more data processing devices (30) having access means to such data, and
- a central control device (35), which, when data access has occurred, checks whether the respective data processing device (30) is authorized to access the respective data,
**characterized in that**
- the central control device is connected by the data memory to the data processing device.

## Revendications

1. Procédé pour le contrôle de l'accès à des données dans des réseaux de communication mobiles, dans lequel
- suite à une activation, un dispositif d'utilisation de données (30) demande des données, enregistrées dans une ou plusieurs mémoires de données (31) du réseau de communication mobile respectif, d'un utilisateur du réseau de communication mobile,
**caractérisé par le fait que**
- pour la demande des données, le dispositif d'utilisation de données (30) envoie un message de demande de lecture (33) ou un message de demande d'écriture (41) à la mémoire de données respective (31),
- la mémoire de données respective (31) envoie une demande de vérification (34, 43) à un dispositif de contrôle central (35),
- ensuite, le dispositif de contrôle central (35) du réseau de communication mobile vérifie à l'aide de critères de vérification prescrits si le dispositif d'utilisation de données (30) est autorisé à accéder à ces données, et
- seulement en cas de résultat de vérification positif, le dispositif de contrôle central (35) permet l'accès.

2. Procédé selon la revendication 1,
**caractérisé par le fait que**
- en cas de résultat de vérification positif, le dispositif de contrôle central (35) permet l'accès, à savoir
- le dispositif de contrôle central (35) envoie un message de réponse de vérification positif (37) à la mémoire de données respective (31)
- puis la mémoire de données (31) transmet (39) les données demandées au dispositif d'utilisation de données (30).

3. Procédé selon la revendication 1,
**caractérisé par le fait que**
- en cas de résultat de vérification positif, le dispositif de contrôle central (35) permet l'accès, à savoir
- le dispositif de contrôle central (35) envoie un message de réponse de vérification positif (45) à la mémoire de données respective (31)
- puis la mémoire de données modifie par l'écriture les données demandées.

4. Dispositif pour le contrôle de l'accès à des données dans des réseaux de communication mobiles, lequel dispositif comporte :
- une ou plusieurs mémoires de données (31) pour la mémorisation de données d'utilisateurs des réseaux de communication mobiles,
- un ou plusieurs dispositifs d'utilisation de données (30) avec des moyens d'accès à ces données, et
- un dispositif de contrôle central (35) qui vérifie en cas d'accès à des données si le dispositif d'utilisation de données (30) respectif est autorisé à accéder aux données respectives,
**caractérisé par le fait que**
- le dispositif de contrôle central est relié au dispositif d'utilisation de données par la mémoire de données.
